# EUROPEAN PATENT APPLICATION

(11) **EP 2 151 365 A1**
(43) Date of publication of application: **10.02.2010**
(21) Application number: 09167274.1
(22) Date of filing: 05.08.2009
(51) Int. Cl.: B62B 3/02

(54) **Vehicle**

(30) Priority: 07.08.2008 NL 2001880
(71) Applicant: Creative Monopolies B.V., 5643 JK Eindhoven (NL)
(72) Inventor: Sweegers, Ildephonsus Theodorus Adriana Maria, 5643 JK, Eindhoven (NL)
(74) Representative: van Oeffelt, Abraham

(57) **Abstract**

Vehicle, comprising an undercarriage (2), a rigid bottom plate (3) carried in supporting manner by the undercarriage, an upper edge (6) formed by a closed frame and displaceable relative to the bottom plate, at least a spacer (4,5) for holding the upper edge at a distance from the bottom plate, a wall part (7), such as a fabric, tensionable between the bottom plate and the upper edge, and a pulling device (8) for drawing the vehicle.

## Description

The present invention relates to a vehicle, in particular a vehicle for transporting objects or children. Vehicles for transporting objects or children are per se known. They generally comprise a basket or tub in which the objects or children can be placed. In order to make these vehicles more manageable in use or to enable storing thereof it is known to make it possible to disassemble or fold down at least parts of the basket or tub.

An example of such a vehicle is given in Netherlands patent NL 1029358, which describes a shopping cart (of the "shopping trolley" type) with foldable basket. Such shopping trolleys have the drawback however that they are only suitable for pushing rather than pulling and, in addition, provide a top-heavy and not very stable construction because the basket or tub is carried high up. In addition, although the tub is carried by the undercarriage, it is not supported thereby on the underside such that the undercarriage provides supporting force for the load of the tub, whereby such shopping carts are of very limited use. Finally, such an undercarriage usually comprise small, co-steering wheels, whereby shopping trolleys are not suitable for use on the street or under off-road conditions but can only be applied on a smooth, hardened surface.

Some of the drawbacks associated with shopping trolleys are obviated by the pull cart described in Netherlands patent NL 1027040. This cart is inherently suitable for pulling and, although it is less top-heavy owing to its dimensioning, the undercarriage provides no support to the load because of the construction necessary for the folding, and this load must be fully taken up by the flexible carrier structure. In addition, the proposed three-wheeled construction results in the danger of tipping over, particularly when negotiating bends.

In order to obviate the drawback of the loading of the bottom of the flexible carrier structure, the German patent application DE 201 14 035 proposes arranging a rigid plating as bottom of the flexible tub of a pull cart. This bottom is however not supported either by the undercarriage of the cart, and makes collapsing of the pull cart a labour-intensive and complicated process. Although the front axle of this pull cart is provided with two wheels, they have a shared rigid axle, whereby it is precisely in bends that they provide little stability and the pull cart will tend to tip over.

On the basis of the above it can be concluded that manageability and a stable and strong construction appear to be conflicting criteria in the prior art in the field of drawn vehicles. It is therefore an object of the present invention to provide a drawn vehicle in which objects or children can be placed, which is manageable in use and can be folded down for storage, but herein provides a stable construction with a considerable load-bearing capacity.

The present invention provides for this purpose a vehicle of the above described type, characterized in that the undercarriage carries the bottom plate in supporting manner. The force exerted by the load is hereby supported by the bottom plate and the chassis, whereby a relatively high supporting force is possible without the force exerted on the flexible wall part depending on the load carried by the cart. This increases the lifespan and the stability of the cart.

In an embodiment wherein the vehicle is intended for pulling by a person, the pulling device is connected to the upper edge. The pulling device, which is formed for instance by a pull bar optionally provided with a handle, hereby engages on the vehicle at a higher position than if it were connected to the chassis, whereby fewer upward directed forces occur during pulling, this resulting in a more stable holding on the ground surface and better pull ergonomics.

In a preferred embodiment the upper edge is preferably formed here by a closed frame for strength purposes.

For the purpose of collapsing the vehicle to enable stowage thereof, the bottom plate comprises in an embodiment at least a first bottom plate part which is pivotally connected on a side thereof to a side of an at least second bottom plate part. The bottom plate parts can be folded up by being moved at the position of the hinge in a direction toward the upper edge of the vehicle. A gripping means such as a loop can be provided for this purpose.

In an alternative embodiment the device comprises an operating member connected to at least a spacer for displacing the upper edge relative to the bottom plate during operation thereof. Such an operating member is preferably connected to all spacers so that the upper edge can be displaced relative to the bottom plate by operating a single operating member.

In order to minimize the number of operations for collapsing of the vehicle, a first spacer is connected in an advantageous embodiment to the first bottom plate part and the upper edge, and a second spacer to the second bottom plate part and the upper edge. Folding the first and the second bottom part toward each other hereby results in the spacers moving toward each other on the bottom side. Because the spacers remain an equal distance from each other on the upper edge, they are hereby displaced from a substantially vertical position to a substantially horizontal position, whereby the upper edge is pulled downward. As soon as the bottom plate parts lie against each other, they can together be laid down horizontally.

In another alternative embodiment the spacers are connected to each other in pairs such that they can be folded down by means of one movement. Two spacers can for instance herein be mutually connected together on a front or rear side, or two spacers on one side of the vehicle.

The first and the second spacer can best be arranged in the vicinity of sides of respectively the first and second bottom plate parts opposite the pivoting side. Their displacement as a result of the folding up of the bottom plate parts is in that case the greatest, whereby the collapsing of the device takes place as quickly as possible. It is otherwise noted here that, in addition to the first and second spacers, a plurality of spacers can be applied, for instance one parallel to each of the first and second spacers, in order to provide a firm support and - if the pulling device engages on the upper edge - transmit the pulling force to the undercarriage.

In order to further facilitate folding-up, at least the sides of the first and second bottom plate parts opposite the pivoting side can be connected slidably to the undercarriage.

In a particular embodiment the undercarriage comprises a tube frame, wherein the bottom plate parts are coupled to a guide which is adapted to slide along at least a tube of the tube frame.

In order to provide a locking of the folded-out position (of use) the vehicle can be embodied such that the first and second bottom plate parts can be pressed through a dead centre during the pivoting, wherein they lie against the undercarriage on a first side of the dead centre; and are movable toward each other on a second side of the dead centre, wherein the spacers connected to the bottom parts move the upper edge in the direction of the bottom plate during the movement of the bottom parts toward each other. The bottom parts preferably lie substantially horizontally against the undercarriage on the first side of the dead centre and they are more preferably urged against the undercarriage by a bias. The vehicle hereby does not move unintentionally out of the folded-out position of use.

In a further embodiment the pulling device is connected rotatably to the upper edge and the vehicle is further provided with a steering device which can be operated by rotating the pulling device. Such a steering device preferably does not comprise a rigid axle but two front wheels (or sliders, such as skates or skis), which can each be steered round a rotation axis of their own located very close to the respective wheel or the respective slider. The track width of the vehicle hereby remains the same during steering, whereby the danger of tipping over is further reduced. For the purpose of transmitting to the steering device the rotating movement of the pulling device relative to the upper edge, a transmission such as a shaft can be provided, which extends with a vertical directional component from the upper edge to the undercarriage.

In an alternative embodiment at least a spacer is length-adjustable in order to thus facilitate the movement of the upper edge toward the bottom plate. The spacer comprises for this purpose for instance a first leg and a second leg, which are pivotally connected to each other so that they can be folded.

The first leg and the second leg preferably have a dead centre during the pivoting, wherein on a first side of the dead centre they hold the upper edge at a distance from the bottom plate such that the wall part is fully tensioned, and on a second side of the dead centre are movable toward each other, wherein they move the upper edge in the direction of the bottom plate. During folding in and out of the device the dead centre forms an indication of whether or not it is locked in a position of use.

In a further embodiment the undercarriage is provided with wheels, wherein the wheels can be fixed in a first position in which the vehicle can travel, and wherein the wheels can be fixed in a second position in which the vehicle can be stored. In an alternative embodiment the undercarriage is provided with sliders, such as skates or skis, to thus form a sledge.

In order to make the transport of objects or children even more comfortable, at least one and preferably a plurality of wheels, skates or skis can be spring-mounted on the undercarriage. The suspension can here form part of the undercarriage, for instance in that a part of the undercarriage is embodied as a torsion spring.

The invention will now be elucidated with reference to the following, non-limitative figures, in which:
- Figure 1 shows a perspective view of a vehicle according to the present invention;
- Figure 2a shows the vehicle of figure 1 with several cut-away parts;
- Figure 2b shows the vehicle of figure 2a during folding-down thereof;
- Figure 2c shows the vehicle of figure 2a during folding-down thereof;
- Figure 3 shows the vehicle of figure 1 with several cut-away parts;
- Figure 4 shows the vehicle of figure 1 with several cut-away parts;
- Figure 5 shows an alternative embodiment of a vehicle according to the present invention;
- Figure 6 shows a second view of the vehicle of figure 5;
- Figure 7 shows a subsequent embodiment of a vehicle according to the present invention;
- Figure 8 shows yet another embodiment of a vehicle according to the present invention;
- Figure 9 shows an embodiment of a vehicle according to the present invention with a another fold-down mechanism;
- Figure 10 shows an embodiment of a vehicle according to the present invention with yet another fold-down mechanism;
- Figure 11 shows the vehicle of figure 10 in folded-down situation;
- Figure 12 shows an embodiment of a vehicle according to the present invention with an undercarriage provided with suspension;
- Figure 13 shows an embodiment of a vehicle according to the present invention with an alternative undercarriage provided with suspension; and
- Figure 14 shows yet another embodiment of a vehicle according to the present invention in folded-down situation.

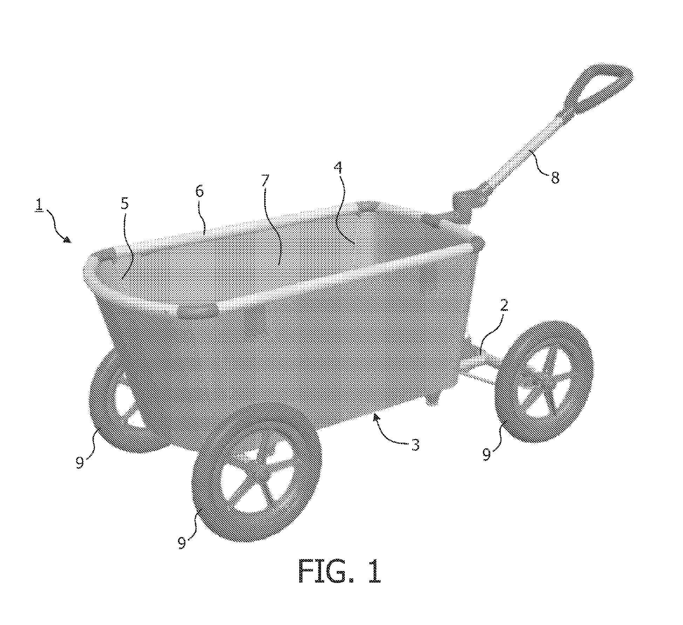

Figure 1 shows a vehicle 1 according to the present invention. The vehicle comprises an undercarriage 2 on which a rigid bottom plate 3 is carried in supporting manner. An upper edge 6 displaceable relative to the bottom plate is held a distance from the bottom plate by means of spacers 4 and 5. A wall part 7, formed from a fabric or a canvas, is stretched between the bottom plate and the upper edge. Together with upper edge 6 and bottom plate 3 wall part 7 forms a tub for placing a load therein, for instance consisting of goods or children. The vehicle is provided with a pulling device 8 for drawing the vehicle. In this embodiment the vehicle is provided with wheels 9, whereby the vehicle can be used as a pull cart.

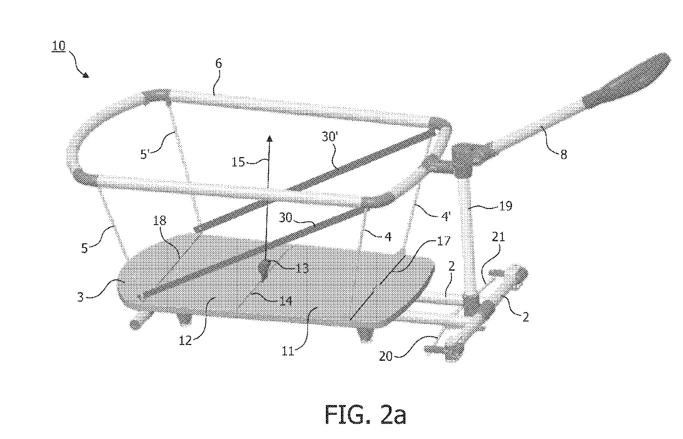

Figure 2a shows a cut-away view 10 of vehicle 1 of figure 1, wherein wall part 7 is not shown. Shown adjacently of spacers 4 and 5 are spacers 4' and 5' which are arranged parallel thereto. The figure also shows shoring straps 30 and 30' which are connected between the lower outer ends of spacers 5 and 5' respectively and the upper outer ends of spacers 4 and 4'. These shoring straps ensure an even more stable construction and contribute particularly toward the distribution of the pulling force exerted on the device via pulling device 8. Further strength can be achieved by also arranging such shoring straps 30 and 30' along the crossing diagonals, i.e. the upper outer ends of spacers 5 and 5' respectively and the lower outer ends of spacers 4 and 4'.

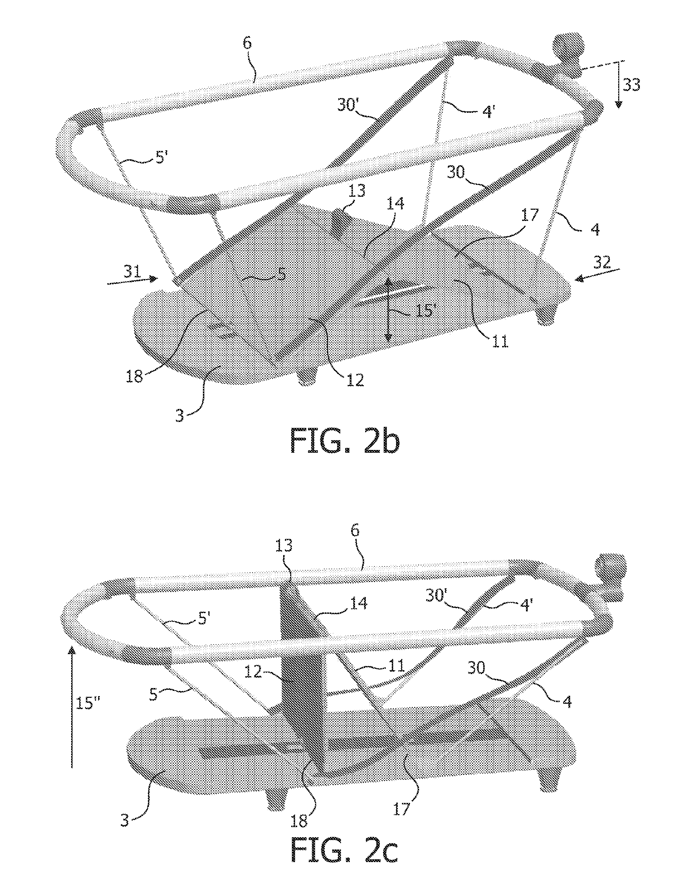

Figure 2a also shows a first bottom part 11 and a second bottom part 12 of bottom plate 3. These bottom parts 11 and 12 are connected to each other for pivoting about a pivot axis 14 and can be moved toward each other by pulling a loop 13 upward in the direction of arrow 15. The sides 17 and 18 remote from pivot axis 14 are here guided along bottom 3 so that bottom parts 11 and 12 come to lie flat against each other. Figure 2 further shows a transmission 19 for transmitting a rotation of pulling device 8 to a steering device of the vehicle, in particular to steering rods 20 and 21 thereof.

Figure 2b shows the vehicle of figure 2a, wherein bottom parts 11 and 12 have been pulled upward over a distance 15' on loop 13. Outer ends 17 and 18 of bottom parts 11 I and 12 have here moved toward each other in directions 31 and 32 so that upper edge 6 has moved in the direction of arrow 33 toward bottom plate 3.

Figure 2c once again shows the vehicle of figures 2a and 2b, wherein loop 13 has been displaced still further in direction 15" so that bottom parts 11 and 12 lie substantially against each other. Shoring straps 30 and 30' have by now slackened and can be folded away together with the flexible wall part (not shown).

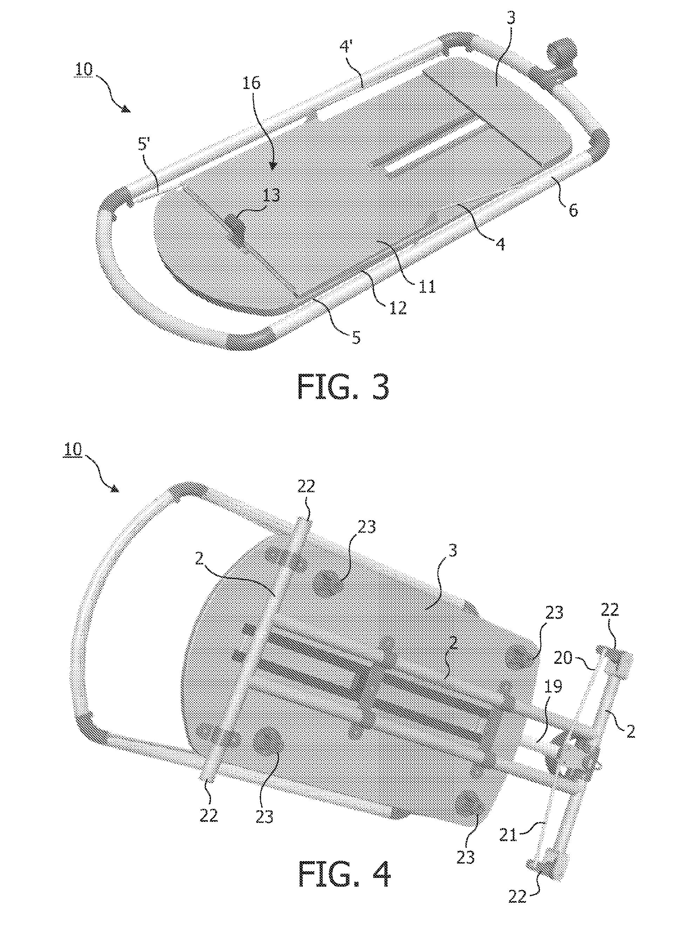

Figure 3 shows the cut-away view 10 of figure 2, wherein bottom parts 11 and 12, after they have been pulled upward on loop 13 in the direction of arrow 15" as shown in figure 2c, are rotated together in the direction of arrow 16 so that they rest one on top of the other on bottom 3. Upper edge 6 is pulled toward bottom plate 3 by spacers 4, 4', 5 and 5', which have been co-displaced with bottom parts 11 and 12, and the vehicle is brought into a collapsed situation suitable for storage thereof.

Figure 4 shows the cut-away view 10 of figures 2 and 3 from the underside. It can be seen how undercarriage 2 extends in longitudinal direction below bottom plate 3, and thus carries this plate in supporting manner. The undercarriage is provided with mounting elements 22 for mounting thereon of the wheels 9, or sliders, as shown in figure 1 for making a sledge of the vehicle. Bottom plate 3 is further provided with fixing elements 23 for storing wheels 9 when the vehicle is in folded-down situation.

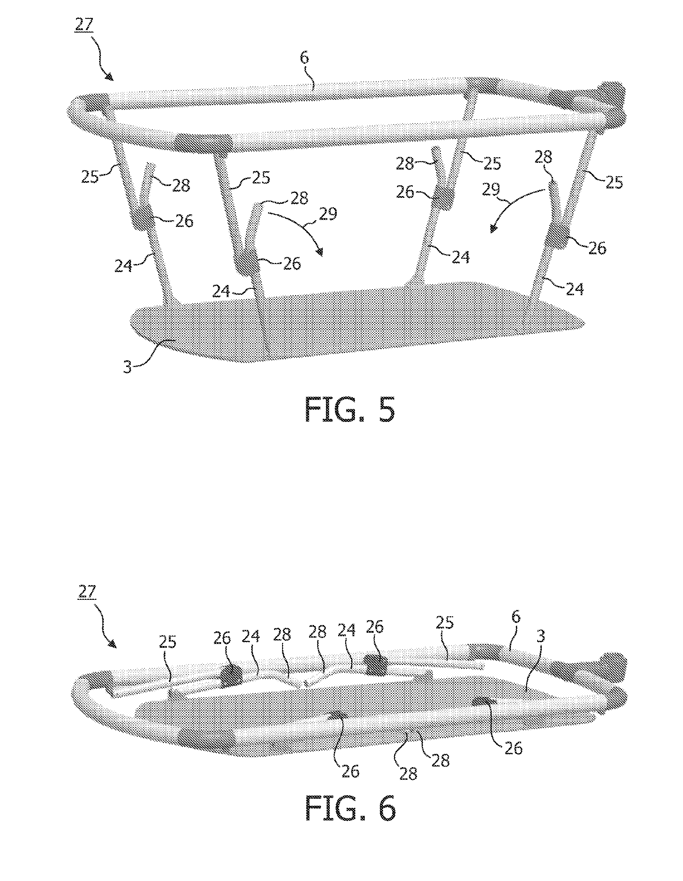

Figure 5 shows a cut-away view of an alternative embodiment 27 of the vehicle according to the present invention. In this embodiment bottom plate 3 and upper ring 6 are held at a mutual distance by alternative spacers, which comprise a first leg 24 and a second leg 25. First leg 24 is connected to second leg 25 via a displaceable hinge 26. By moving handles 28 toward each other in the direction of arrows 29 the upper ring 6 can be moved toward bottom plate 3, and vehicle 27 is thus folded down. Not shown are undercarriage 2 and the wheels or sliders connected thereto, and a steering device and pulling device.

Figure 6 shows alternative embodiment 27 of the vehicle of figure 5 in folded-down situation, after handles 28 have been moved in the direction of arrows 29 of figure 5.

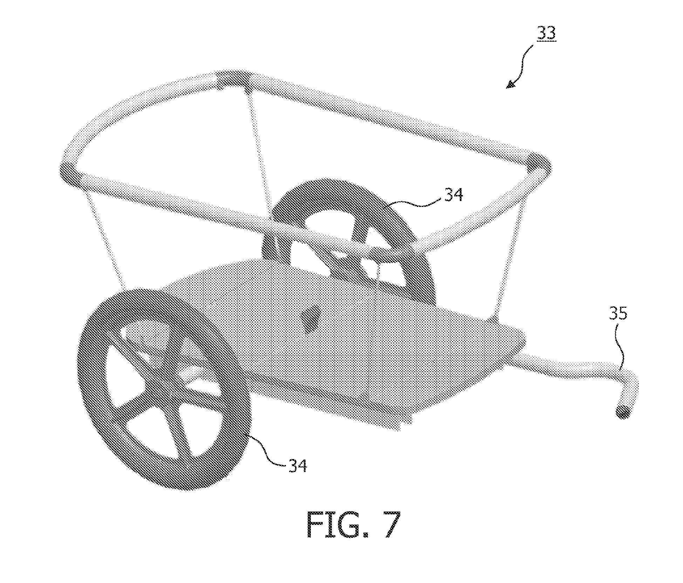

Figure 7 shows a subsequent embodiment 33 of a vehicle according to the present invention, which largely corresponds to the vehicle of figure 1, albeit that vehicle 33 is intended as bicycle cart and is provided for this purpose with two wheels 34, and the undercarriage (not shown) is provided with a pulling device formed by pull bar 35.

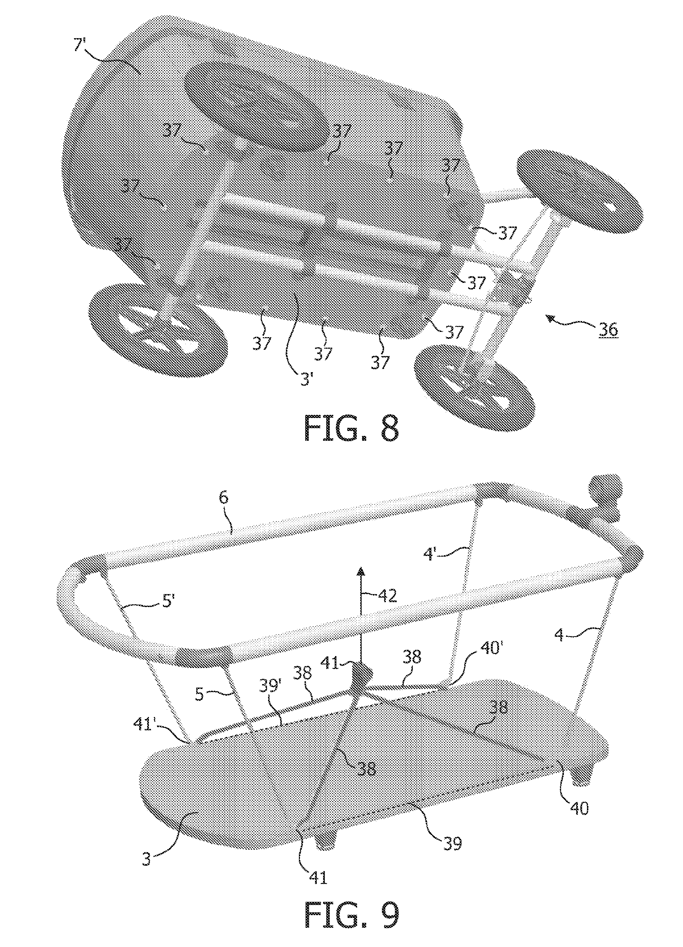

Figure 8 shows a subsequent embodiment 36, wherein flexible wall 7' is connected to bottom plate 3' via press-stud connections 37. The wall can hereby be released in simple manner in order to be replaced, cleaned or exchanged. Other peripheral fastenings are possible in addition to a press-stud connection.

Figure 9 shows an embodiment of the present invention wherein spacers 4, 4', 5, 5' are connected to operating members 38. These operating members are pivotally connected to lower outer ends 40, 40', 41, 41' of spacers 4, 4', 5, 5'. These lower outer ends are mounted slidably on the respective rails 39 and 39'. Lower outer ends 40 and 41 and lower outer ends 40' and 41' are hereby moved toward each other when loop 41 is moved in the direction of arrow 42. The tub can thus be folded down in exceptionally simple manner and with a single operation. When being displaced, the spacers must here also be pushed through a dead centre which occurs when the loop is situated directly above bottom plate 3.

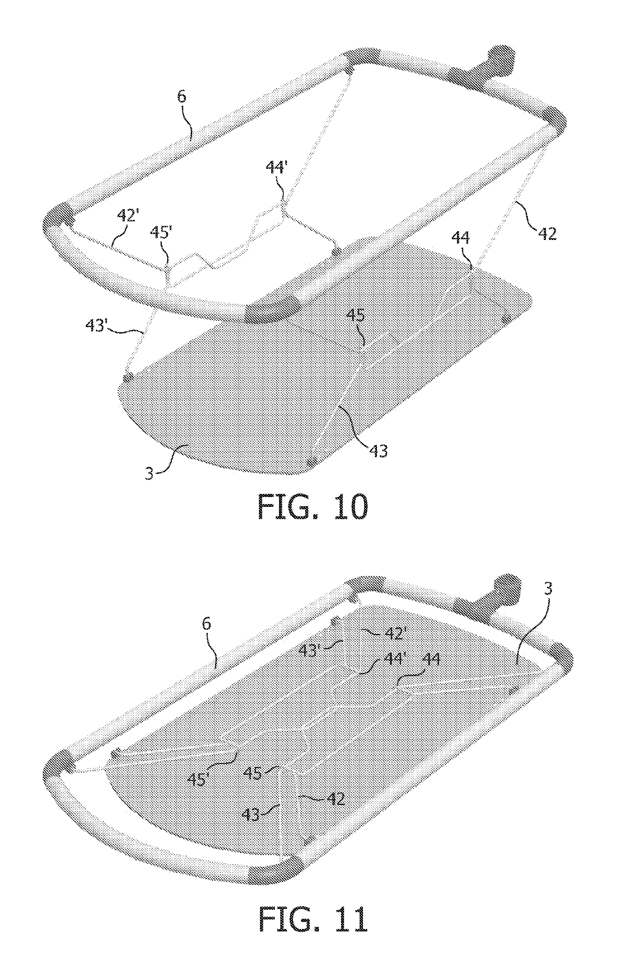

Figure 10 shows a further alternative embodiment in which the spacers are formed by a first bracket part 42, 42' and a respective second bracket part 43, 43' co-acting therewith. Bracket part 42 is connected to bracket part 43 for pivoting around pivot points 44 and 45 and bracket part 42' is connected to bracket part 43' for pivoting around pivot points 44' and 45'. Close to the shown position, in which upper edge 6 is furthest removed from bottom plate 3, is situated a dead centre in the rotation of bracket part 42 relative to bracket part 43 and of bracket part 42' relative to bracket part 43'.

Figure 11 shows the alternative embodiment of figure 10 in folded-down situation.

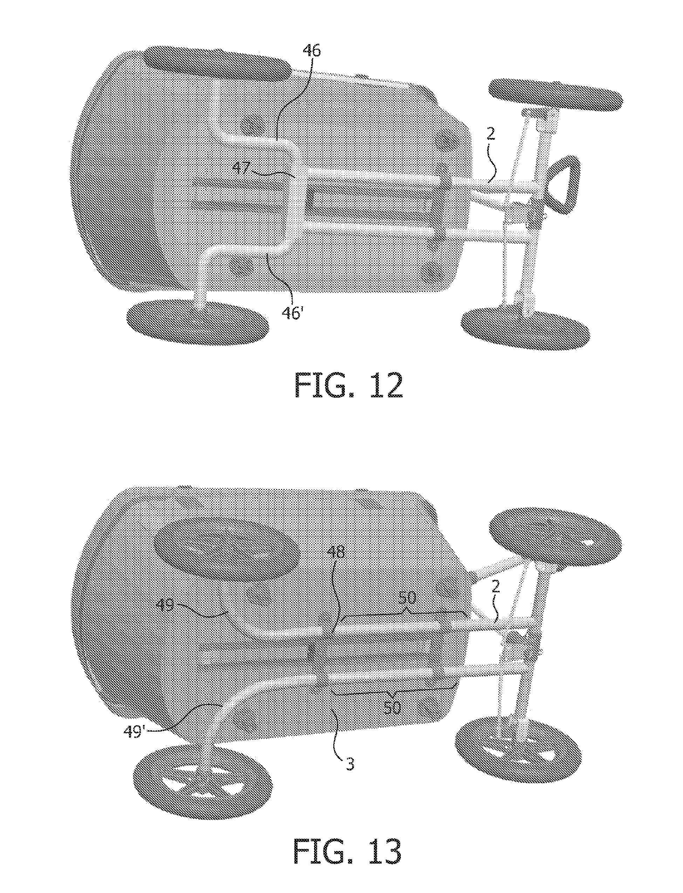

Figure 12 shows another further embodiment of the vehicle according to the present invention, wherein undercarriage 2 is provided with a resilient element 47 on which rear wheel suspensions 46 and 46' are mounted. Further comfort is thus achieved when transporting goods or children.

Figure 13 shows an alternative embodiment of the vehicle of figure 12, wherein wheel suspensions 49 and 49' are formed by a part of undercarriage 2 which extends beyond fixing element 48. In this embodiment undercarriage 2 supports the bottom plate in bearing manner along part 50.

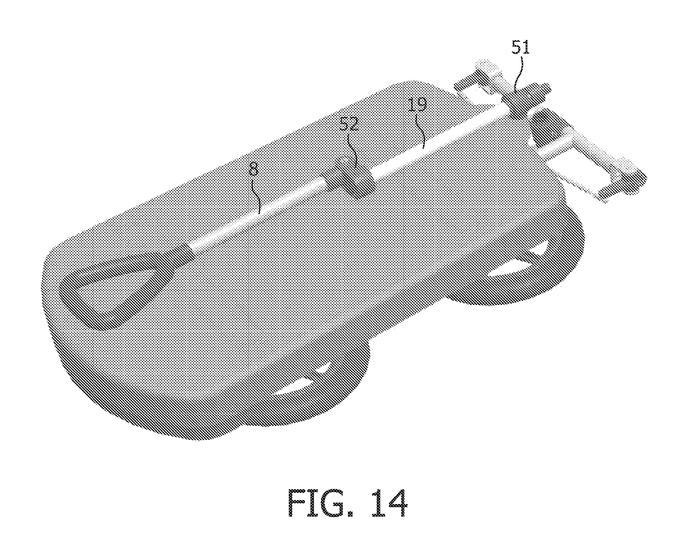

Figure 14 shows an embodiment of the present invention in which the vehicle is fully collapsed. Shown particularly is how pull bar 8 and transmission 19 are folded mutually in line, this being made possible by rotatable couplings 51 and 52.

## Claims

1. Vehicle, comprising - an undercarriage provided with wheels or sliders such as skis;
- a rigid bottom plate;
- an upper edge, formed by a frame, displaceable relative to the bottom plate;
- at least a first spacer for holding the upper edge at a distance from the bottom plate;
- a wall part, such as a fabric, tensionable between the bottom plate and the upper edge;
- a pulling device for drawing the vehicle,
**characterized in that**
- the bottom plate is carried in supporting manner by the undercarriage.

2. Vehicle as claimed in claim 1, wherein the pulling device is connected to the upper edge.

3. Vehicle as claimed in claim 1 or 2, wherein the bottom plate comprises at least a first bottom plate part which is pivotally connected on a side thereof to a side of an at least second bottom plate part.

4. Vehicle as claimed in claim 3, wherein the first spacer is connected to the first bottom plate part and the upper edge, and wherein a second spacer is connected to the second bottom plate part and the upper edge.

5. Vehicle as claimed in claim 4, wherein the first and the second spacer are connected to the bottom plate parts in the vicinity of sides of respectively the first and second bottom plate parts opposite the pivoting side.

6. Vehicle as claimed in claim 4 or 5, wherein at least the sides of the first and second bottom plate parts opposite the pivoting sides are connected slidably to the undercarriage.

7. Vehicle as claimed in claim 6, wherein the first and second bottom plate parts can be pressed through a dead centre during the pivoting, wherein they:
- lie against the undercarriage on a first side of the dead centre; and
- are movable toward each other on a second side of the dead centre, wherein the spacers connected to the bottom parts move the upper edge in the direction of the bottom plate during the movement of the bottom parts toward each other.

8. Vehicle as claimed in any of the foregoing claims 2-7, wherein the pulling device is connected rotatably to the upper edge, and wherein the vehicle is further provided with a steering device which can be operated by rotating the pulling device.

9. Vehicle as claimed in claim 1, wherein the length of at least a spacer is variable.

10. Vehicle as claimed in claim 9, wherein the at least one spacer comprises a first leg and a second leg, which are pivotally connected to each other.

11. Vehicle as claimed in claim 10, wherein the first leg and the second leg have a dead centre during the pivoting, wherein:
- on a first side of the dead centre they hold the upper edge at a distance from the bottom plate such that the wall part is fully tensioned; and
- on a second side of the dead centre they are movable toward each other, wherein they move the upper edge in the direction of the bottom plate.

12. Vehicle as claimed in any of the foregoing claims, wherein the undercarriage is provided with wheels, wherein the wheels can be fixed in a first position in which the vehicle can travel, and wherein the wheels can be fixed in a second position in which the vehicle can be stored.

13. Vehicle as claimed in any of the foregoing claims 1-11, wherein the undercarriage is provided with skates or skis so as to thus form a sledge.

14. Vehicle as claimed in any of the foregoing claims, wherein the pulling device is collapsible or releasable.

15. Vehicle as claimed in any of the foregoing claims, wherein at least a wheel or slider is spring-mounted on the undercarriage.
